# EUROPÄISCHE PATENTANMELDUNG

(11) **EP 4 234 312 A1**
(43) Veröffentlichungstag der Anmeldung: **30.08.2023**
(21) Anmeldenummer: 23156445.1
(22) Anmeldetag: 14.02.2023
(51) Int. Cl.: B60L 53/35, B60L 53/38, B60L 5/36, B60L 5/42

(54) **VEREINFACHTE MEHRTEILIGE AUFTANKVORRICHTUNG**

(30) Priorität: 28.02.2022 CH 1972022; 10.05.2022 US 202217740592
(71) Anmelder: Tecflower AG, 8854 Siebnen (CH)
(72) Erfinder: Reinger, Sascha, 8854 Siebnen (CH); Riegel, Galina, 8854 Siebnen (CH)
(74) Vertreter: Prins Intellectual Property AG

(57) **Zusammenfassung**

Bei einer mehrteilige Auftankvorrichtung (1) zur Auftankung einer elektrischen Antriebsbatterie (A) oder eines Fluidtanks (B) eines bewegbaren Fahrzeugs, soll eine vereinfachte reproduzierbare Auftankung erreicht werden. Dies wird dadurch erreicht, dass die mit dem Fahrzeug fahrzeugseitig mitgeführte Kopplungsvorrichtung Verbindungsmittel (230) als mindestens eine Ladespule, in Form von Ladekontakten oder als Ladestutzen (230) ausgestaltet aufweist und einen Manipulatorarm (24) zum Herablassen, Verfahren und Absenken der Kontaktplatte (23) in einem Zentrum der stationären Bodenkopplungsvorrichtung (3) aufweist, wobei der Manipulatorarm (24) ein fahrzeugseitig schwenk- und rotierbar befestigtes Oberarmsegment (240), ein Gelenk (241'), ein Unterarmsegment (242) und ein weiteres Gelenk (241") zur Befestigung der Kontaktplatte (23) aufweist und von der Rechner- und Steuereinheit (21) automatisch gesteuert ist.

## Beschreibung

### Technisches Gebiet

Die vorliegende Erfindung beschreibt eine mehrteilige Auftankvorrichtung zur Auftankung einer elektrischen Antriebsbatterie oder eines Fluidtanks eines bewegbaren Fahrzeugs, umfassend eine fahrzeugseitige Kopplungsvorrichtung mit einer Aufladeverbindung, einer Rechner- und Steuereinheit, einer Kontaktplattenverbindung und einer bewegbaren Kontaktplatte mit Verbindungsmitteln, sowie eine am Boden stationär unbewegbar angeordnete Bodenkopplungsvorrichtung mit mindestens einer Aufladespule, mit Aufladekontakten oder einem Tankstutzen kompatibel zu den gewählten Verbindungsmitteln, sowie ein Auftankungsverfahren mit einer mehrteiligen Auftankvorrichtung zur Auftankung einer elektrischen Antriebsbatterie oder eines Fluidtanks eines bewegbaren Fahrzeugs.

### Stand der Technik

Vorrichtungen und entsprechende Verfahren zum Aufladen von Antriebsbatterien von Fahrzeugen wie Elektrofahrzeugen oder Hybridfahrzeugen mit Elektroantrieb sind in verschiedenen Varianten bekannt. Dabei steht vor allem die Einfachheit und die Anwenderfreundlichkeit im Fordergrund der Entwicklungen. Im besten Fall wird das Fahrzeug einfach an eine bestimmte Position navigiert und dort durch manuelle Betätigung einer mehrteiligen Auftankvorrichtung aufgeladen. Meist muss man von Hand noch diverse Einstellungen machen. Aus einem Stromversorgungsnetz wird dann die Antriebsbatterie mit oder ohne weiteres Dazutun des Benutzers aufgeladen.

Aus der DE102014221998 ist eine mehrteilige Aufladevorrichtung bekannt, welche sich auf das kabellose, induktive Aufladen der Antriebsbatterie konzentriert. Eine motorseitige bzw. fahrzeugseitige Kopplungsvorrichtung mit einer Ladespule wird mit einer stationären Bodenkopplungsvorrichtung gekoppelt, wobei die Ladespule mit einer Aufladespule als Teil der Bodenkopplungsvorrichtung, welche am Fussboden gelagert ist, gekoppelt wird. Die Aufladespule oder Primärspule ist üblicherweise am Boden einer Garage angebracht und mit einer Aufladeelektronik verbunden, sodass ein elektromagnetisches Ladefeld erzeugt werden kann. Sobald die Ladespule oder Sekundärspule im elektromagnetischen Ladefeld der Ladespule ist, kann eine induktive Aufladung der Antriebsbatterie erfolgen. Die Bewegung der Ladespule findet in der Bodenebene statt. Beide Spulen fungieren als Elektromagneten, welche sich anziehen und zueinander drängen, je nach induziertem Strom bzw. Magnetfeld. Eine ausreichend effiziente induktive Aufladung soll entsprechend einer optimale Ausrichtung der Sekundärspule zur Primärspule ohne grossen Rangieraufwand durch DE102014221998 erreichbar werden.

Erreicht wurde die Positionsoptimierung durch Bewegung der Primärspule als Teil der Bodenkopplungsvorrichtung, durch lineare Veschiebung, Verdrehung und/oder Verkippung. Es sollten Positionierungssignale während der Positionierung erfasst werden, um eine Einstellung der Primärspule relativ zur Sekundärspule zu erreichen. Basierend auf den Positionierungssignalen sind Stellmittel der Primärspule nötig, um die elektromagnetische Kopplung zu optimieren, damit bei immer grösser werdenden Energiemengen geringere Energieverluste und möglichst geringe elektromagnetische Emissionen nach aussen wirken.

Die Lösung von DE102014221998 benötigt neben Sensoren und Stellmitteln auch eine Steuerelektronik zur Erfassung der Sensordaten und entsprechender rückgekoppelter Positionierung der bodenseitigen Primärspule. Diese Positionierung könnte natürlich zusätzlich noch trainiert und automatisiert werden, was aber eines noch grösseren und aufwändigeren Elektronikaufwands und Software bedarf, was die Positionierung teurer und auch störanfälliger macht. Die komplexe Elektromechanik muss in den Boden eingelassen und dort bewegbar montiert werden.

### Darstellung der Erfindung

Hier soll eine vereinfachte reproduzierbare und sichere Postionierung einer fahrzeugseitigen Kopplungsvorrichtung relativ zur Bodenkopplungsvorrichtung geschaffen werden, welche durch vergleichsweise einfache Mittel gelöst wird und eine vollautomatische, wartungsfreie und weniger störanfällige Auftankung von Antriebsbatterien aber auch Fluidtanks ermöglicht.

Variationen von Merkmalskombinationen bzw. geringfügige Anpassungen der Erfindung sind in der Detailbeschreibung zu finden, in den Figuren abgebildet und in die abhängigen Patentansprüche aufgenommen worden.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.

Es sind dargestellt in
- Figur 1a: zeigt eine schematische Aufsicht auf die mehrteilige Auftankvorrichtung mit einem Fahrzeug, dessen Vorderachse teilweise auf die stationäre Bodenkopplungsvorrichtung gefahren wurde, wobei die fahrzeugseitige Kopplungsvorrichtung noch im Lagerungszustand an der Fahrzeugunterseite befestigt ist.
- Figur 1b: zeigt eine schematische Ansicht der Frontpartie des Fahrzeugs aus Figur 1a, wobei eine Kontaktplatte der fahrzeugseitigen Kopplungsvorrichtung 2 auf einen Boden abgesenkt und in Richtung des Zentrums der Bodenkopplungsvorrichtung verfahren ist.
- Figur 2: zeigt eine Schnittansicht der mehrteiligen Auftankvorrichtung, wobei die Kontaktplatte auf den Boden abgelassen, mit einem Verfahrmechanismus verfahren und Verbindungsmittel der Kontaktplatte mittels eines Absenkmechanismus auf die stationäre Bodenkopplungsvorrichtung in eine Auftankposition gebracht wurde.
- Figur 3: zeigt eine schematische Teilschnittansicht einer weiteren Ausführungsform der mehrteiligen Auftankvorrichtung.

### Beschreibung

Hier wird eine mehrteilige Auftankvorrichtung 1 beschrieben, welche eine fahrzeugseitige Kopplungsvorrichtung 2 und eine stationäre Bodenkopplungsvorrichtung 3 umfasst beschrieben. Die fahrzeugseitige Kopplungsvorrichtung 2 ist an einer Unterseite eines Fahrzeugs befestigt und mit diesem Fahrzeug mitführbar. Hier sind nur zwei Räder, die Radaufhängung, eine Antriebsbatterie A und ein Fluidtank B gezeigt. Mit der mehrteiligen Auftankvorrichtung 1 soll eine möglichst einfache vollautomatische Betankung der Antriebsbatterie A mit elektrischem Strom oder des Fluidtanks B mit einem Fluid, beispielsweise eines Verbrennungsgases erfolgen.

Im Zentrum der Bodenkopplungsvorrichtung 3 ist eine Aufladespule 30, ein Aufladekontakt 30 oder ein Tankstutzen 30 angeordnet, mittels einer Zuleitung 31 mit Strom bzw. einem Fluid beaufschlagt und mittels einer Aufladeelektronik 32 der stationären Bodenkopplungsvorrichtung 3 gesteuert betreibbar.

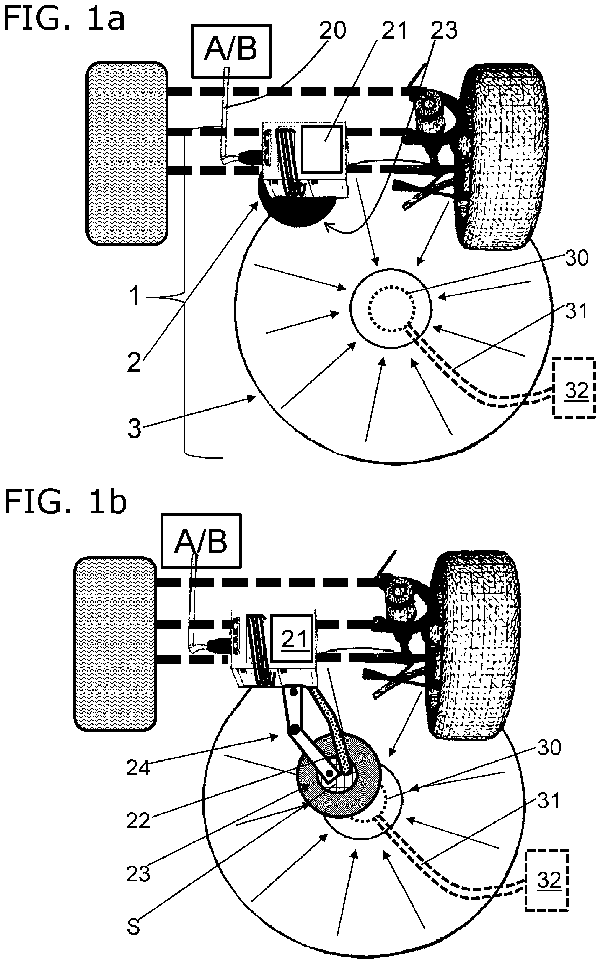

Die fahrzeugseitige Kopplungsvorrichtung 2 ist über eine Aufladeverbindung 20, als mindestens ein Elektrokabel mit der Antriebsbatterie A oder als Schlauch mit dem Fluidtank B, verbunden und weist eine Rechner- und Steuereinheit 21 und eine vom Fahrzeug in Richtung Boden absenkbare Kontaktplatte 23 auf. Eine Kontaktplattenverbindung 22 ist in Figur 1b erkennbar und kann entsprechend von mindestens einem Elektrokabel oder einem Fluidschlauch gebildet sein.

Mittels eines Manipulatorarms 24, in Figur 1b angedeutet, gesteuert von der Rechner- und Steuereinheit 21 kann die Kontaktplatte 23 zur Auftankung in Richtung Boden vom Fahrzeug abgelassen werden, bis auf den darunterliegenden Boden. Ebenfalls durch den Manipulatorarm 24, der entsprechend gestaltet ist, kann die Kontaktplatte 23 in das Zentrum der stationären Bodenkopplungsvorrichtung 3 verfahren werden, in Richtung der Pfeile, so nahe es der Manipulatoramr 24 bzw. die Kontaktplattenverbindung 22 zulässt. Dabei ist im Zentrum die Übertragung des elektrischen Stromes oder die Stutzenverbindung der Fluidschläuche optimal.

Nach dem Ablassen der Kontaktplatte 23 und dem gleichzeitigen oder zeitversetzten Verfahren wird die Kontaktplatte 23 als Ganzes mit daran angeordneten Verbindungsmitteln 230 auf den Boden bündig abgesenkt.

Nachdem das Fahrzeug in der Nähe der Bodenkopplungsvorrichtung 3 abgestellt wurde, wird die Kontaktplatte 23 an oder in welcher sich die Verbindungsmittel 230 befinden möglichst im Zentrum der stationären Bodenkopplungsvorrichtung 3 abgestellt, mit Kontakt zur Aufladespule 30, den Aufladekontakten 30 oder dem Tankstutzen 30. Dazu reicht der Manipulatorarm 24 aus, welcher elektromechanisch oder pneumatisch, gesteuert durch die Rechner- und Steuereinheit 21 angetrieben, automatisiert bewegbar ist.

Damit die Steuerung des Manipulatorarms 24 automatisiert erfolgen kann, ist mindestens ein Sensor S an der Kontaktplatte 23 angeordnet, welcher hier im Zentrum der Kontaktplatte 23 angeordnet ist. Als Sensor S kommen verschiedene Ausführungsformen in Frage, bespielsweise auf elektromagnetischer oder magnetischer Basis, sowie optische Sensoren im sichtbaren Bereich oder im Infrarotbereich oder ein rein mechanischer Kontaktsensor. Dabei kann an der Bodenkopplungsvorrichtung 3 ein entsprechendes Gegenstück des gewählten Sensors S zur Unterstützung angebracht werden.

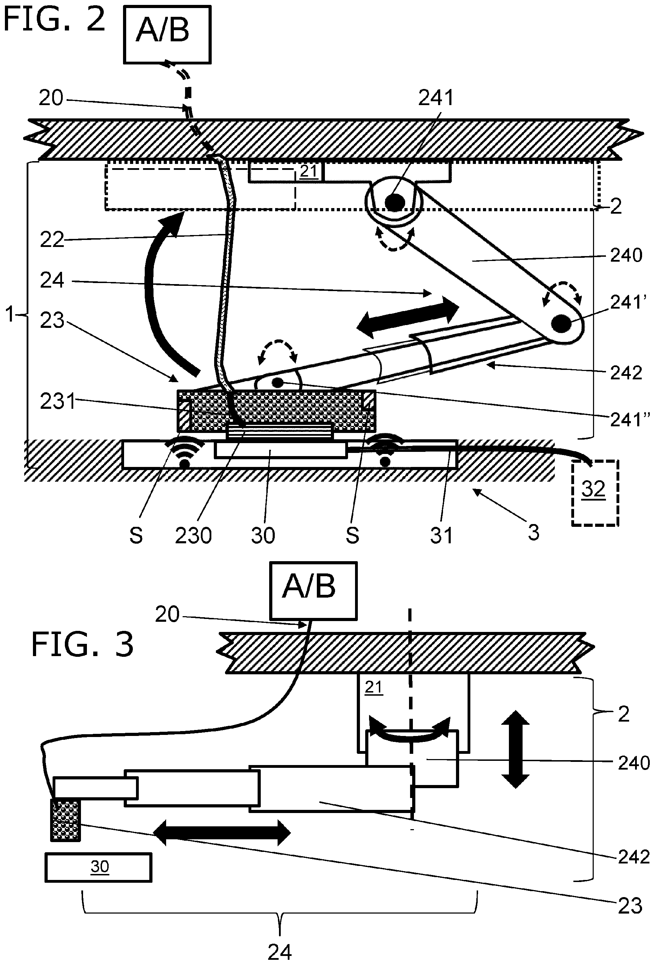

In Figur 2 ist ein Fahrzeugunterboden teilweise dargestellt, an welchem die fahrzeugseitige Kopplungsvorrichtung 2 angeordnet ist, wobei die Rechner- und Steuereinheit 21 das Herablassen der Kontaktplatte 23 und die gezielte Bewegung der Kontaktplatte 23 in unmittelbare Nähe der Aufladespule 30, der Aufladekontakte 30 oder des Tankstutzens 30 ermöglicht.

Der Manipulatorarm 24 und die daran befestigte Kontaktplatte 23 wird durch die Rechner- und Steuereinheit 21 automatisiert ausgelöst, abgesenkt und lateral zum Boden gesteuert. Im Wesentlichen weist der Manipulatorarm 24 hier ein fahrzeugseitig schwenk- und rotierbar befestigtes Oberarmsegment 240 auf. Die Befestigung des Oberarmsegmentes 240 ist durch ein Gelenk 241 an der Fahrzeugunterseite erreicht.

An der von der Fahrzeugseite abgewandten Ende des Oberarmsegmentes 240 ist ein weiteres Gelenk 241' angeordnet ist. Am Gelenk 241 ist ein Unterarmsegment 242 schwenkbar befestigt. Die Kontaktplatte 23 ist über ein weiteres Gelenk 241" am freie Ende des Unterarmsegmentes 242 befestigt, wobei auch hier ein gewisse Schwenkbewegbarkeit vorhanden sein sollte, damit ein paralleles Aufstellen der Kontaktplatte 23 auf der Bodenkopplungsvorrichtung 3 ermöglicht ist. Durch die Rechner- und Steuereinheit 21 kann der Manipulator 24 derart im Raum zwischen Fahrzeugunterseite und Boden bewegt werden, dass die Kontaktplatte 23 eine maximale Reichweite erreicht.

Der Manipulatorarm 24 kann elektrisch, elektromechanisch oder pneumatisch von der Rechner- und Steuereinheit 21 gesteuert sein.

Während des Herablassens und Verfahrens des Manipulatorarms 24 wird die Kontaktplatte 23 anhand der Sensoren S zum Ort mit optimaler Strom- bzw. Fluidübertragung an der Bodenkopplungsvorrichtung 3 bewegt.

Am Ort des Zentrums der stationären Bodenkopplungsvorrichtung 3 können hier elektromagnetische Wechselfelder, elektrischer Strom oder das Fluid optimal von der Aufladespule 30, den Aufladekontakten 30 oder dem Tankstutzen 30 optimal in die Kontaktplatte 23 bzw. in die Verbindungsmittel 230 in Form mindestens einer Ladespule 230, zweier Ladekontakte 230 oder mindestens eines Ladestutzens 230 übergehen, während der Auftankprozess gestartet ist. Vom Verbindungsmittel 230 führt ein Elektrokabel 231 oder ein Ladeschlauch 231 zur Kontaktplattenverbindung 22 und damit indirekt über die Aufladeverbindung 20 zur Antriebsbatterie A oder zum Fluidtank B.

Damit eine vollautomatische Auftankung möglich ist, muss die optimale Position der Kontaktplatte 23 mit mindestens einem Sensor S über der Aufladespule 30, den Aufladekontakten 30 oder dem Tankstutzen 30 gefunden werden und mittels Manipulatorarm 24 dorthin verfahren werden.

In Figur 2 ist der eingefahrene Zustand des Manipulatorarms 24 mit Kontaktplatte 23 gestrichelt dargestellt. Das Einklappen des Manipulatorarms 24 ist mit dem Einfachpfeil angedeutet. Die Gestaltung des Manipulatorarms 24 muss dabei so erfolgen, dass die Kontaktplattenverbindung 22 bei Bewegung nicht durchtrennt wird.

Um den Verfahrbereich des Manipulatorarms 24 bzw. der Kontaktplatte 23 noch zu erhöhen, ist hier optional das Unterarmsegment 242 als linear ausziehbares Teleskopsegment ausgeführt. Dieses Teleskopsegment kann entlang des Doppelpfeils ein- und ausgefahren werden, wodurch die Kontaktplatte 23 optimal auf das Zentrum der stationären Bodenkopplungsvorrichtung 3 bewegbar ist. Das Teleskopsegment 242 kann von der Rechner- und Steuereinheit 21 elektrisch, elektromechanisch oder pneumatisch gesteuert bewegt werden.

Entscheidend ist, dass in der stationären Bodenkopplungsvorrichtung 3 keine bewegbaren Bauteile verwendet werden und die Zuleitung 31 und die Aufladespule, die Aufladekontakte oder der Tankstutzen 30 ortsfest stabil befestigt sind. Sogar ohne eine Aufladeelektronik 32 kann die Auftankung funktionieren, wenn die Zuleitung 31 immer mit elektrischem Strom oder Fluid beaufschlagt ist.

Sobald die Verbindungsmittel 230 mit der Aufladespule 30, den Aufladekontakten 30 oder dem Tankstutzen 30 verbunden sind, kann die Auftankung beginnen.

Es ist eine elektrische Aufladung der Antriebsbatterie A durch eine leitergebundene Aufladung durch Kontakt zweier Ladekontakte 230 und Aufladekontakten 30 oder eine drahtlose Aufladung durch Kontakt einer Ladespule 230 und einer Aufladespule 30 erreichbar.

Soll der Fluidtank B im Fahrzeug aufgetankt werden, muss ein schliessender Kontakt zwischen Ladestutzen 230 an der Kontaktplatte 23 und einem Tankstutzen 30 an der stationären Bodenkopplungsvorrichtung 3 erreicht werden.

Die Kontaktplatte 23 ist bevorzugt mehrlagig als Gehäuse ausgestaltet und weist einen Innenraum auf, in welchem die Verbindungsmittel 230, Sensoren S angeordnet sein können.

Zur Durchführung des Auftankungsverfahrens muss in einem ersten Schritt das Fahrzeug von einem Fahrzeuglenker im Bereich der stationären Bodenkopplungsvorrichtung 3 abgestellt werden. Hier ist die fahrzeugseitige Kopplungsvorrichtung 2 im Bereich der Frontachse des Fahrzeuges angeordnet und die stationäre Bodenkopplungsvorrichtung 3 kommt in etwa zwischen den Vorderrädern zu liegen. Da die Bodenkopplungsvorrichtung 3 unbewegbar ist, muss das Fahrzeug entsprechend positioniert werden.

Ist das Fahrzeug platziert kann die Rechner- und Steuereinheit 21 gestartet und das gewünschte Auftankungsverfahren gestartet. Entsprechend sollte eine Bedienmöglichkeit der Rechner- und Steuereinheit 21 am Armaturenbrett des Fahrzeugs eingerichtet sein. Gesteuert von der Rechner- und Steuereinheit 21 wird die Kontaktplatte 23 mit dem Manipulatorarm 24 vom Fahrzeug bis zum Kontakt mit der Bodenkopplungsvorrichtung 3 abgelassen.

Mittels Manipulatorarm 24 wird die Kontaktplatte 23 in Richtung des optimalen Auftankpunktes der stationären Bodenkopplungsvorrichtung 3 bewegt. Gesteuert mittels des mindestens einen Sensors S findet der Manipulatorarm 24 die beste Position der Kontaktplatte 23, damit die Verbindungsmittel 230 in einen minimalen Abstand zur Aufladespule 30, den Aufladekontakten 30 oder dem Tankstutzen 30 gebracht ist.

Am Schluss wird die Kontaktplatte 23 samt Verbindungsmitteln 230, gesteuert von der Rechner- und Steuereinheit 21 automatisch abgesetzt, wodurch die Verbindungsmittel 230 mit der Aufladespule 30, den Aufladekontakten 30 oder dem Tankstutzen 30 gekoppelt werden.

Wenn die Zuleitung 31 ständig mit elektrischem Strom oder mit Fluid beaufschlagt ist, kann der Auftankungsvorgang direkt beginnen. Die Rechner- und Steuereinheit 21 kann auch zur Überwachung der Auftankung eingesetzt werden.

Wenn die stationäre Bodenkopplungsvorrichtung 3 die Aufladeelektronik 32 umfasst, dann kann der Auftankungsvorgang entsprechend durch die Aufladeelektronik 32 gestartet und nach Vollendung wieder beendet werden. In diesem Fall sorgt die Aufladeelektronik 32 für die automatische Auftankung und Beendung des Prozesses.

Nach erfolgter Auftankung, werden die Verbindungsmittel 230 wieder von der stationären Bodenkopplungsvorrichtung 3 gelöst und der Manipulatorarm 24 samt Kontaktplatte 23 wieder in den Lagerungszustand am Fahrzeugboden bewegt.

Bei Verwendung der Aufladeelektronik 32 kann dafür gesorgt werden, dass die Stromversorgung und Fluidbeaufschlagung nur bei gestartetem Auftankprozess stattfindet, was aus Sicherheitsgründen und Umweltschutzgründen bevorzugt ist.

In einer weiteren Ausführungsform gemäss Figur 3, weist die mit dem Fahrzeug fahrzeugseitig mitgeführte Kopplungsvorrichtung 2 hier nicht dargestellte Verbindungsmittel als mindestens eine Ladespule, in Form von Ladekontakten oder als Ladestutzen ausgestaltet, auf. Der gesamte Manipulatorarm 24 ist mit der Rechner- und Steuereinheit 21 verbunden und kann gesamthaft Herabgelassen werden in Richtung Bodenkopplungsvorrichtung 3. Am Manipulatorarm 24 ist das Oberarmsegment 240 samt teleskopierbarem Unterarmsegment 242 absenkbar gestaltet, lässt sich um 360° um eine Längsachse rotieren und das Unterarmsegment 242 kann in einer Ebene so verfahren werden, dass eine Linearverschiebung der Kontaktplatte 23 an verschiedene Orte in die Nähe des Zentrums der stationären Bodenkopplungsvorrichtung 3. Es ist eine Mechanik vorgesehen, welche am Oberarmsegment 240 angreift und damit den gesamten Manipulatorarm 24 heben und senken kann und um die Längsachse rotieren kann. Das Unterarmsegment 242 ist teleskopierbar ausgestaltet, umfasst mehrere Teile, die in einer Längsrichtung gemäss dem Doppelpfeil verschiebbar sind. Am Ende des Unterarmsegmentes 242, auf der vom Oberarmsegment 240 beabstandeten Seite ist die Kontaktplatte 23 angeordnet, die durch die Mechanik und das teleskopierbare Unterarmsegment 242 rotierbar, schwenkbar bzw. linear verschiebbar bewegt wird, was von der Rechner- und Steuereinheit (21) automatisch gesteuert ist.

### Bezugszeichenliste

A Antriebsbatterie (Elektrofahrzeug/Hybridfahrzeug)
B Fluidtank
   1 Mehrteilige Auftankvorrichtung
   2 fahrzeugseitige Kopplungsvorrichtung
      20 Aufladeverbindung
      21 Rechner- und Steuereinheit (zur Positionierung und teilweise als Laderegler)
      22 Kontaktplattenverbindung (Fluidschlauch oder Elektrokabel)
      23 Kontaktplatte
         230 Verbindungsmittel=Ladespule/ Ladekontakt /Ladestutzen
         231 Elektrokabel/Ladeschlauch
         S Sensor (elektromagnetisch/magnetisch/optisch (sichtbar/infrarot), Kontaktsensorik)
      24 Manipulatorarm (mindestens ein Segment)
         240 Oberarmsegment
         241, 241', 241" Gelenk
         242 Unterarmsegment (Teleskopsegment, linear ausziehbar)
   3 stationäre Bodenkopplungsvorrichtung
      30 Aufladespule/Aufladekontakte/Tankstutzen
      31 Zuleitung (elektrischer Strom/Fluid)
      32 Aufladeelektronik

## Patentansprüche

1. Mehrteilige Auftankvorrichtung (1) zur Auftankung einer elektrischen Antriebsbatterie (A) oder eines Fluidtanks (B) eines bewegbaren Fahrzeugs, umfassend eine
fahrzeugseitige Kopplungsvorrichtung (2) mit einer Aufladeverbindung (20), einer Rechner- und Steuereinheit (21), einer Kontaktplattenverbindung (22) als Elektrokabel oder Fluidschlauch ausgeführt und einer bewegbaren Kontaktplatte (23) mit Verbindungsmitteln (230), sowie
eine am Boden stationär unbewegbar angeordnete Bodenkopplungsvorrichtung (3) mit mindestens einer Aufladespule (30), mit Aufladekontakten (30) oder einem Tankstutzen (30) kompatibel zu den gewählten Verbindungsmitteln (230),
**dadurch gekennzeichnet, dass**
die mit dem Fahrzeug fahrzeugseitig mitgeführte Kopplungsvorrichtung (2)
Verbindungsmittel (230) als mindestens eine Ladespule, in Form von Ladekontakten oder als Ladestutzen (230) ausgestaltet aufweist und
einen Manipulatorarm (24) zum Herablassen, Verfahren und Absenken der Kontaktplatte (23) in einem Zentrum der stationären Bodenkopplungsvorrichtung (3) aufweist,
wobei der Manipulatorarm (24) auf und ab bewegbar gelagert ist, mindestens ein fahrzeugseitig schwenk- und rotierbar befestigtes Oberarmsegment (240) ein und teleskopierbares Unterarmsegment (242) zur Befestigung der Kontaktplatte (23) aufweist und von der Rechner- und Steuereinheit (21) automatisch gesteuert ist.

2. Mehrteilige Aufladevorrichtung (1) nach Anspruch 1, wobei der Manipulatorarm (24) das fahrzeugseitig schwenk- und rotierbar befestigtes Oberarmsegment (240), ein Gelenk (241'), ein Unterarmsegment (242) und ein weiteres Gelenk (241") zur Befestigung der Kontaktplatte (23) aufweist und
von der Rechner- und Steuereinheit (21) automatisch gesteuert ist.

3. Mehrteilige Aufladevorrichtung (1) nach einem der Ansprüche 1 bis 2, wobei
das Oberarmsegment (240) des Manipulatorarms (24) fahrzeugseitig an einem Gelenk (241) schwenkbar befestigt ist.

4. Mehrteilige Aufladevorrichtung (1) nach einem der vorhergehenden Ansprüche, wobei das Unterarmsegment (242) als Teleskopsegment (242) von der Rechner- und Steuereinheit (21) elektrisch, elektromechanisch oder pneumatisch steuerbar bewegt und damit linear ausziehbar ausgestaltet ist.

5. Mehrteilige Aufladevorrichtung (1) nach einem der vorhergehenden Ansprüche, wobei der Manipulatorarm (24) elektrisch, elektromechanisch oder pneumatisch von der Rechner- und Steuereinheit (21) gesteuert ausgebildet ist.

6. Mehrteilige Aufladevorrichtung (1) nach einem der vorhergehenden Ansprüche, wobei an der Kontaktplatte (23) oder im Innenraum der Kontaktplatte (23) mindestens ein Sensor (S) angeordnet und mit der Rechner- und Steuereinheit (21) zur Bestimmung der optimalen Position relativ zur Bodenkopplungsvorrichtung (3) verbunden ist, wobei der mindestens eine Sensor (S) ein Berührungssensor, ein elektromagnetischer Sensor, ein Magnetsensor, ein optischer Sensor oder Infrarotsensor ist.

7. Mehrteilige Aufladevorrichtung (1) nach einem der vorhergehenden Ansprüche, wobei die stationäre Bodenkopplungsvorrichtung (3) eine Aufladeelektronik (32) umfasst, welche den Auftankprozess startet und beendet, wobei entsprechend elektrischer Strom oder ein Fluid gesteuert zugeführt wird.

8. Auftankungsverfahren mit einer mehrteiligen Auftankvorrichtung (1) zur Auftankung einer elektrischen Antriebsbatterie (A) oder eines Fluidtanks (B) eines bewegbaren Fahrzeugs, **gekennzeichnet durch** die Schritte:
- Positionierung des Fahrzeugs in die Nähe einer örtlich fixierten unbewegbaren Bodenkopplungsvorrichtung (3)
- Bedienung einer Rechner- und Steuereinheit (21) zum Start des Auftankverfahrens,
- Absenken einer Kontaktplatte (23) in Richtung Bodenkopplungsvorrichtung (3) am Boden unter dem Fahrzeug mittels eines Manipulatorarms (24) elektrisch, elektromechanisch oder pneumatisch von der Rechner- und Steuereinheit (21) gesteuert derart,
dass Verbindungsmittel (230) der Kontaktplatte (23) in einen minimalen Abstand zu einer Aufladespule (30), Aufladekontakten (30) oder einem Tankstutzen (30) der Bodenkopplungsvorrichtung (3) gebracht sind
- Starten des Auftankvorganges durch Beaufschlagung der Aufladespule (30) oder der Aufladekontakte (30) mit elektrischem Strom oder des Tankstutzens (30) mit Fluid, wobei nach dem Auftanken, eine
- Zurückführung der Kontaktplatte (23) mittels Manipulatorarms (24) in einen Lagerzustand erfolgt.

9. Auftankungsverfahren mit einer mehrteiligen Auftankvorrichtung (1) nach Anspruch 8, mit einer Auftankvorrichtung (1) nach einem der Ansprüche 1 is 7.
